# EUROPEAN PATENT SPECIFICATION

(11) **EP 3 360 660 B1**
(45) Date of publication and mention of the grant of the patent: **04.10.2023**
(21) Application number: 17000232.3
(22) Date of filing: 14.02.2017
(51) Int. Cl.: B29C 45/00, B29D 99/00, B29K 19/00, B29L 31/26

(54) **SOUND AND VIBRATION DAMPING SEALING MEMBER BASED ON THERMOPLASTIC ELASTOMERS OR THERMOSETTING RESINS**
GERÄUSCH- UND SCHWINGUNGSDÄMPFUNGS-DICHTUNGSELEMENT AUF DER BASIS THERMOPLASTISCHER ELASTOMERE ODER WÄRMEHÄRTBARER HARZE
ÉLÉMENT D'ÉTANCHÉITÉ AMORTISSANT LES VIBRATIONS ET LES SONS À BASE D'ÉLASTOMÈRES THERMOPLASTIQUES OU DE RÉSINES THERMODURCISSABLES

(43) Date of publication of application: 15.08.2018
(73) Proprietor: NITTO BELGIUM N.V, 3600 Genk (BE)
(72) Inventor: Vandersmissen, Karel, 3600 Genk (BE); Mackie, David, 3600 Genk (BE); Parloo, Eli, 3600 Genk (BE)
(74) Representative: Grünecker Patent- und Rechtsanwälte PartG mbB

(56) References cited:
- WO-A1-2016/130976
- CN-A- 102 532 778
- DE-A1-102014 204 831
- JP-A- 2001 088 745
- Oberbach Karl: "Kunststofftaschenbuch", , vol. 28. Auflage 1 January 2001 (2001-01-01), XP055960786, ISBN: 9783446216051 Retrieved from the Internet: URL:https://docplayer.org/58073995-Kunstst off-taschenbuch.html [retrieved on 2022-09-14]

## Description

### FIELD OF INVENTION

This invention relates to a sealing member suitable for vibration and/or sound damping, wherein the sealing member has a uniform composition, optionally with an adhesive layer attached thereto, and comprises a thermoplastic elastomer (TPE) as the main component, or wherein the sealing member comprises multiple sections, optionally with an adhesive layer attached thereto, wherein each of the multiple sections comprise a thermoplastic elastomer (TPE) as the main component. The invention further relates to a vehicle body member comprising said sealing member, as well as to a method of manufacturing said sealing member.

### BACKGROUND OF THE INVENTION

A large number of articles such as, for example, auto body parts and domestic electrical appliances, comprise cavities into which sealing material is inserted which has a noise blocking and/or vibration damping function and prevents moisture from contacting corrosion sensitive parts.

For instance, automobile fenders comprise sealing members introduced therein to block/absorb engine noise directed towards the passenger compartment. However, in order to be of practical use the sealing material must ideally fulfill several further requirements. In particular, it must not absorb moisture (e.g. road moisture splatter, rain, snow), must be chemically resistant to engine compartment fluids (e.g. engine oil, battery acid), fulfill flammability requirements, be temperature resistant between about -40°C and 90°C and be ideally flexible to allow for an easy insertion into the fender assembly (e.g. between an outer body panel, an inner body panel and a wheelhouse liner).

Conventionally, such cavities are filled with foam materials as acoustic and vibration absorbers, wherein the foam materials are typically either previously shaped to fit the cavity and inserted through an opening or formed by heating a foamable material after its injection into the cavity, e.g. during paint curing. Standard materials for die-cut foam-like absorbers include polyethylene (PE) (see CN 201703437 U, for example), whereas polyurethane (PUR)-, nitrile/PVC-, PE-, epoxy- or vinyl polymer-based foams, to which blowing agents are added, are typically used for injection foaming.

However, these absorber types and the materials used for their manufacture are disadvantageous under several aspects. For example, it has been found that PE-based foams are prone to shrinkage upon heat exposure, which may cause a complete loss of the sound and vibration absorbing and moisture blocking functions. In addition, PE-based foams tend to degrade over time and to absorb moisture, so that they are not suitable to effectively prevent corrosion.

Inserting a foamable material which is capable of expanding upon heating has the problem that the material expansion is difficult to control and to predict, so that either the temperature conditions must either be meticulously adjusted to the seal expansion process or the absorber obtained under normal paint curing conditions does not always reliably seal the cavity. In order to overcome the latter disadvantage, US 6,062,624 B1 proposes forming an acoustical baffle by providing an expandable sealant between two foil faced boards, wherein the expandable sealant flows horizontally out from the boards and ensures complete filling of the cavity corners. However, foamed materials are not always entirely watertight, hereby tending to moisture absorption and poor body corrosion prevention, even in cases where they exhibit a skin layer on the foamed portion (see US 5,665,785 A, for example). In addition, mechanically fixing a foamed sealant (e.g. by using clips, screws or similar connectors) within a cavity is difficult for the reasons given above.

A large number of non-foamed sealing materials has been proposed which provide for excellent water blocking properties, heat resistance, vibration damping and/or fire retardancy and either exhibit a multilayer structure (see JP 2001-088745 A, US 2010/0152335 A1, and US 6,370,824 B1, for example) or comprise embedded non-polymeric material, such as inorganic fillers or organic reinforcing fibers (see e.g. EP 0 430 109 A1 and EP 0 508 303 A1). WO 2016/130976 A1 discloses a weatherseal comprising a stiffener and a resin coating providedon a TPE-based foam. However, the preparation of said sealing materials is typically relatively complex and their flexibility likewise tends to leave room for improvement. DE 10 2014 204 831 discloses an applicator head for a dispenser for cosmetic or pharmaceutical liquids and foodstuffs, which comprises a pump device with an elastic component, however, without referring to vibration/sound damping properties. CN 102532778 A discloses a TPE-based elastomer door seal for improved low-temperature resistance.

In view of the above, there exists a need to provide a sealing member having excellent sound and vibration damping properties, which effectively functions as moisture barrier and is chemically resistant to engine compartment fluids, fulfills flammability requirements, is resistant to deformation at elevated temperatures, which allows to be manufactured easily and facilitates insertion into the cavities to be sealed. From the environmental standpoint, it would be further desirable to provide a sealing member which may be fully and/or easily recycled (e.g. before vehicle scrappage).

### SUMMARY OF THE INVENTION

The present invention solves these objects with the subject matter of the claims as defined herein. Further advantages of the present invention will be further explained in detail in the section below.

This invention describes a sealing member for sound and/or vibration damping comprising one or more hollow internal cavity/cavities, wherein the sealing member has a uniform composition, optionally with an adhesive layer attached thereto, and comprises a thermoplastic elastomer (TPE) as the main component; or wherein the sealing member has multiple sections, optionally with an adhesive layer attached thereto, wherein each of the multiple sections comprise a thermoplastic elastomer (TPE) as the main component and the thermoplastic elastomer (TPE) in each section may be identical or different; wherein the thermoplastic elastomer in each case is selected from a compound comprising an elastomeric component at a content of 60 to 98% by weight and a thermoplastic component at a content of 2 to 40% by weight based on the total weight of the thermoplastic elastomer. In particular, the invention is based on the finding that recyclable thermoplastic elastomers exhibit superior noise blocking and vibration damping performance, provide for an excellent moisture barrier when compared to foamed materials, do not degrade over time or shrink upon thermal loading, and exhibit excellent durability and a sufficient flexibility to allow for an easy assembly even in cavities having complex forms.

In further aspects, the present invention relates to a vehicle body member having a cavity comprising the aforementioned sealing member for sound and/or vibration damping and to methods of manufacturing the same.

Preferred embodiments of the sealing member for sound and/or vibration damping and its manufacturing method according to the present invention and other aspects of the present invention are described in the following description and the claims.

### BRIEF DESCRIPTION OF THE DRAWINGS

Fig. 1 shows the exemplary geometry of a foam fender seal.
Fig. 2a illustrates a preferred embodiment of a fender seal in accordance with the present invention comprising two half-segments in disconnected state
Fig. 2b shows the folded fender seal connected via the fixing points.
Fig. 3a is a cross-section illustrating a preferred embodiment of fixing point comprising a self-connection.
Fig. 3b is a cross-section illustrating the central portion defining the hollow cavity and lip portions extending therefrom.
Fig. 4 is a graph showing the transmission loss of PE and TPE samples at frequencies between 2 Hz and 6.4 kHz in different configurations.
Fig. 5a represents a cross-section of circular samples prepared by injection molding.
Fig. 5b shows a photograph of circular samples in disconnected form.
Fig. 5c shows a photograph of circular samples connected via the fixing point.
Fig. 5d shows a photograph of the steel tubes used in the experiments

### DETAILED DESCRIPTION OF THE INVENTION

For a more complete understanding of the present invention, reference is now made to the following description of the illustrative embodiments thereof:

In one embodiment, the present invention relates to a sealing member for sound and/or vibration damping comprising one or more hollow internal cavity/cavities, wherein the sealing member has a uniform composition, optionally with an adhesive layer attached thereto, and comprises a thermoplastic elastomer (TPE) as the main component, wherein the thermoplastic elastomer is selected from a compound comprising an elastomeric component at a content of 60 to 98% by weight and a thermoplastic component at a content of 2 to 40% by weight based on the total weight of the thermoplastic elastomer.

The wording "uniform composition" as used herein, denotes a material consisting of a single, homogeneous phase, as opposed to multilayer compositions conventionally used in the art.

In an alternative embodiment, the present invention relates to a sealing member comprising one or more hollow internal cavity/cavities and having multiple sections, optionally with an adhesive layer attached thereto, wherein each of the multiple sections comprise a thermoplastic elastomer (TPE) as the main component and the thermoplastic elastomer (TPE) in each section may be identical or different, wherein the thermoplastic elastomer is selected from a compound comprising an elastomeric component at a content of 60 to 98% by weight and a thermoplastic component at a content of 2 to 40% by weight based on the total weight of the thermoplastic elastomer. In this case, the thermoplastic elastomer (TPE) used for each of the multiple sections may be identical or different, for example if additional functionalities are desired. For instance, a combination of different thermoplastic elastomers may be used to create a relatively flexible sealing lip section and a less flexible central section.

From the viewpoint of recyclability, the sealing member preferably has a uniform composition, optionally with an adhesive layer attached thereto, and comprises a thermoplastic elastomer (TPE) as the main component; or the sealing member preferably has multiple sections, optionally with an adhesive layer attached thereto, wherein each of the multiple sections comprise a thermoplastic elastomer (TPE) as the main component and the thermoplastic elastomer (TPE) in each section may be identical or different. In this case, it is further preferable that the total content of thermoplastic elastomer(s) is at least 90% by weight, more preferably at least 95% by weight based on the total weight of polymeric components present in the sealing member. It is further preferred that the polymeric components comprised in the sealing member consist of one or more thermoplastic elastomer(s), which ensures that the sealing member is fully recyclable. In a specifically preferred embodiment, the sealing member consists of one or more thermoplastic elastomer(s) and optional additives, which will be further explained below.

The thermoplastic elastomer(s) may be selected from copolymers or physical mixtures of polymers having both thermoplastic and elastomeric properties. The specific choice of thermoplastic and elastomeric materials is not particularly limited and may be suitably selected by the skilled artisan depending on the flexibility and temperature stability, taking into account the geometry and dimensions of the resulting sealing member. A suitable choice of materials includes thermoplastic elastomers based on copolyamides, polyester elastomers or copolyesters, urethanes, styrene block copolymers (e.g. SBS, SEBS, SEPS, MBS, SEEPS), olefin-based thermoplastic elastomers (e.g. PP/EPDM), and cross-linked olefin-based thermoplastic elastomers.

The thermoplastic elastomer used for the uniform composition or each of the sections is compounded from a mixture comprising an elastomeric component at a content of 60 to 98% by weight and a thermoplastic component at a content of 2 to 40% by weight based on the total weight of the thermoplastic elastomer. Preferably, the thermoplastic elastomer compounded from a mixture comprising an elastomeric component at a content of 70 to 97% by weight, preferably at a content of 70 to 95% by weight, and a thermoplastic component at a content of 3 to 30% by weight, preferably at a content of 5 to 30% by weight based on the total weight of the thermoplastic elastomer.

In a preferred embodiment, the elastomeric component is a vulcanized rubber, under environmental aspects preferably a recycled vulcanized rubber, which is preferably used in a physical mixture with a thermoplastic component at the content ranges given above. The thermoplastic component which may be compounded with the elastomeric component is not particularly limited and may include, but is not limited to, polystyrene, poly(methyl methacrylate), acrylonitrile butadiene styrene, polyamide, polybenzimidazole, polycarbonate, polyether sulfone, urethane, polyphenylene oxide, polyphenylene sulfide, polypropylene, polyvinyl chloride, and fluoropolymer. As a specific example which may be suitably used as a thermoplastic elastomer in the present invention, EPMT (elastomeric powder modified thermoplastic, commercially available from Ruhr Compounds GmbH) may be mentioned.

The sealing member composition may comprise optional additives selected from fillers (e.g. calcium carbonate, silica, carbon black, carbon nanotubes, kaolin, mica, talc, clay, glass fibers, and/or aramid fibers), antioxidants (e.g. radical scavenging antioxidants), nucleating agents (e.g. talc, silica, (poly)carboxylic acid salts), colorants (e.g. inorganic pigments selected from metal oxides, sulfides and/or hydroxides), plasticizing agents (e.g. ester plasticizers), and flame retardants. If present, the total content of said optional additives is preferably 60% by weight or less, further preferably 50% by weight or less based on the total weight of the sealing member.

Advantageously, the use of thermoplastic elastomer allows both recycling of excess material emerging during production of the sealing member and of the finished sealing member after scrapping. In comparison to foamed materials it also exhibits improved noise blocking performance, enhanced moisture barrier properties and durability, and is less prone to shrinkage at elevated temperatures.

In order to compensate for the higher weight compared with foamed materials, the sealing member of the present invention is configured to comprise one or more hollow internal cavity(s). Such a design may be accomplished by the manufacturing process itself or, preferably, by manufacturing the sealing member in two half-segments which are connectable through one or more fixing points, so that the sealing member comprises a hollow internal cavity upon connection of the two half-segments. The latter design allows for a simple manufacturing process, and the resulting half-segments may be connected before or after delivery (by the car manufacturer, for example). While the fixing points may consist of openings which allow for a connection through separately provided components (e.g. clips or screws made of plastic or metal), they are preferably configured to be mechanically self-connecting, e.g. by a female/male clip connection provided in the two half-segments. It is to be emphasized that in the latter configuration, secure connection between the two half-segments is enabled by the use of thermoplastic elastomers providing the necessary durability and dimension stability even at elevated temperatures.

In a further preferred embodiment from a logistics point of view, the two half-segments are connected by a hinge connection which may be formed of the same material as the half-segments. Also, said design avoids a misalignment of the two half-segments during the connection step.

In another preferred embodiment, the sealing member is formed so as to comprise one or more sealing lip portions extending from the portion defining the hollow internal cavity. The lip portions are typically formed at a thickness which is the same or lower than the thickness of the portions defining the hollow internal cavity and ensure an improved flexibility of the edges of the sealing member, thereby enhancing its moisture barrier and corrosion prevention function and allowing easier insertion into the cavity to be sealed. In a further embodiment, the sealing lip portions may be formed by using a thermoplastic elastomer composition which differs from that used for the central portion and exhibits higher flexibility.

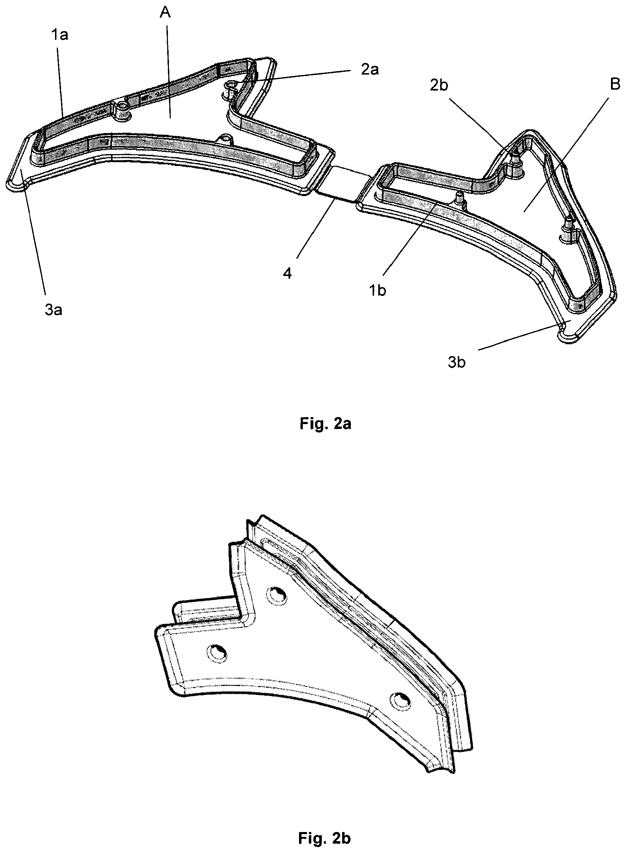

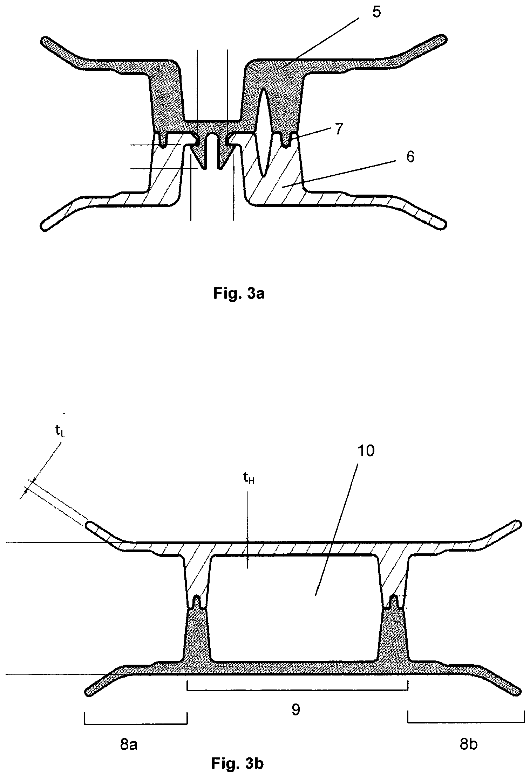

An exemplary configuration of a sealing member according to a preferred embodiment of the present invention will be further illustrated below with reference to Figures 2a, 2b, 3a and 3b by means of a fender seal.

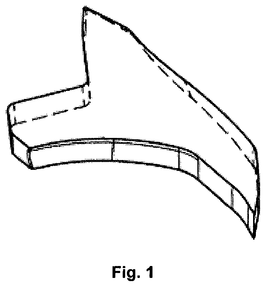

A typical shape of a conventional fender seal (either pre-cut or formed by expansion during thermal curing processes) inserted between an outer body panel, an inner body panel and a wheelhouse liner of an automobile is shown in Fig. 1. On the other hand, Fig. 2a illustrates a preferred embodiment of a fender seal in accordance with the present invention comprising two half-segments (A and B) comprising a plurality of fixing points 2a and 2b. The half-segments (A and B) further comprise lip portions 3a/3b extending from the central portions (1a and 1b) which - upon connection of the two half-segments - define a hollow cavity in accordance with the cross-section illustrated in Fig. 3b. In addition, the half-segments (A and B) could be connected via a hinge connection (4), which may be configured as a small strip. Before or after delivery, the half-segments may then be folded and connected at the fixing points, resulting in the configuration shown in Fig. 2b.

An example configuration of a fixing point comprising a self-connection is illustrated in Fig. 3a. Herein, a male connector portion of one half-segment (5) comprising a pin-like feature and an opening provided in a female connector portion (6) comprised in the complementary half-segment are assembled into each other in order to securely connect both half-segments. Any other suitable mechanical fixation is also considered. As is shown in the cross-section of Fig. 3a, the sealing member may comprise additional hollow cavity portions and tongue-and-groove joints (7) formed between the half-segments which additionally enhance mechanical hold.

Fig. 3b shows a cross-section, which illustrates the central portion (9) defining the hollow cavity (10) and the lip portions (8a and 8b) extending therefrom. Preferably, the lip portions (8a and 8b) surround the central portion (9) along its entire circumference. At their outer edges, the lip portions (8a and 8b) preferably exhibit a thickness t_{L} lower than the thickness t_{H} of the portions surrounding the hollow cavity.

In general, the wall thicknesses of the sealing member may be suitably selected by the skilled artisan depending on the type of thermoplastic elastomer and the desired rigidity and flexibility. Preferably, the wall thicknesses are in the range of from 0.5 to 10 mm.

Typically, the sealing member will be designed to snugly fit into the cavity to be sealed without requiring additional fixation (be it mechanical through screws, clips etc. or chemical fixation through adhesive layers) to the surrounding material, which further facilitates assembly. However, if the application requires particularly strong bonding of the sealing member in the cavity, mechanical fixation means and/or an adhesive layer may be incorporated. The material used for the optional adhesive layer is not particularly limited and may be suitably selected by the skilled artisan from adhesives known in the art.

The sealing member of the present invention may be used in cavities of any parts of manufacturing which necessitate sound damping, vibration damping, a moisture barrier function and/or corrosion prevention, including auto body parts (e.g. fender, inner/outer dash, car roof, insulation hood) and domestic electrical appliances (e.g. whitegoods). In a preferred embodiment, the sealing member is used in direct contact with the (finished or unfinished) metallic surface of the parts of manufacturing.

In a preferred embodiment, the present invention relates to a vehicle body member, further preferably an automotive fender comprising the above-described sealing member for sound and/or vibration damping. Advantageously, in the manufacturing process of vehicles, the sealing member according to the present invention may be applied after the car body paint curing step, so that, contrary to thermal foam expansion seals, the curing temperature conditions do not have to be taking into account when performing the sealing.

While the method of manufacturing the sealing member of the present invention is not particularly limited, one embodiment of the present invention relates to a method of manufacturing a sealing member for sound and/or vibration damping comprising a step of forming the above-described sealing member by a molding process. Specific molding processes may be suitably selected by the skilled artisan depending on the main component. Suitable molding processes include (reactive) injection molding, extrusion molding, rotational molding, blow molding, transfer molding, thermoforming, pultrusion, casting or compression molding. In a preferred embodiment, injection molding is used as the molding process. Herein the composition comprising the thermoplastic elastomer may be fed into a heated barrel, mixed, and forced into a mold cavity, where it cools and hardens to the configuration of the cavity. For the manufacture of sealing members consisting multiple sections, injection molding may be carried out as a multi-component injection molding process (e.g. 2K-molding) including, but not being limited to sequential molding, co-injection, or overmolding, for example.

Accordingly, the sealing member described above may be manufactured in a procedure comprising only a single or a few steps, which remarkably simplifies the production process when compared to the manufacture of complex multilayer structures. In addition, use of thermoplastic elastomers allows excess material to be recycled or directly reused. In combination, the method of the present invention thus provides a simple, cost-effective and environmentally friendly sealing member production process.

### EXAMPLES

### Acoustic blocking properties

In an initial series of experiments, the transmission loss of polyethylene (PE) foam has been compared to that of the thermoplastic elastomer EPMT (purchased from Ruhr Compounds GmbH). For transmission loss measurements, an impedance tube technique according to ISO 10534-2 was used in a range of from 2 Hz to 6400 Hz. For this purpose, a single layer EPMT with thickness 1.6 mm was compared to PE foam with thickness 20 and 40 mm. To evaluate the actual concept, also 2 layers of EPMT with thickness 1.6 mm and a distance in between of 35 and 65 mm respectively was measured.

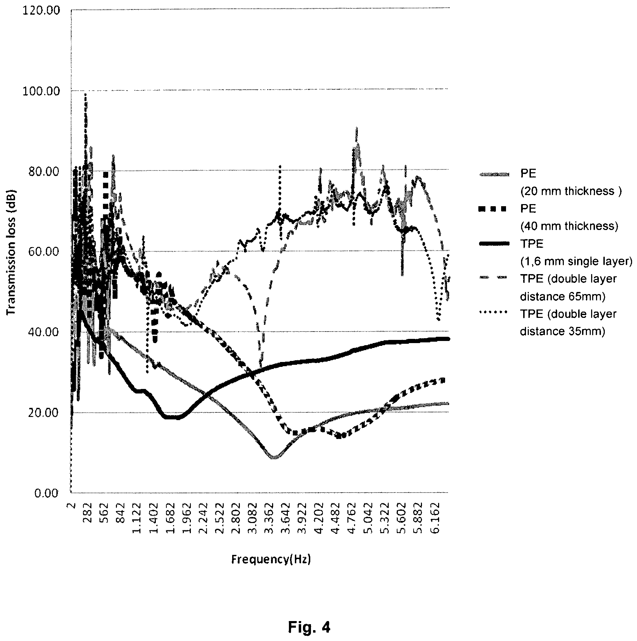

The results of the transmission loss measurements are shown in Fig. 4. The graph demonstrates that at a thickness of 1.6 mm, the thermoplastic elastomer exhibits a higher transmission loss in the high frequency range (> 3 kHz) when compared to the thicker PE foam samples, whereas the TPE material with in between distance of 35 respectively 65 mm, provides at least similar transmission loss in the frequency range of from 2 Hz to 2 kHz, and superior transmission loss at frequencies higher than 2 kHz.

Thus, it is demonstrated that the thermoplastic elastomer material exhibits excellent acoustic blocking properties.

### Dimensional stability at elevated temperatures

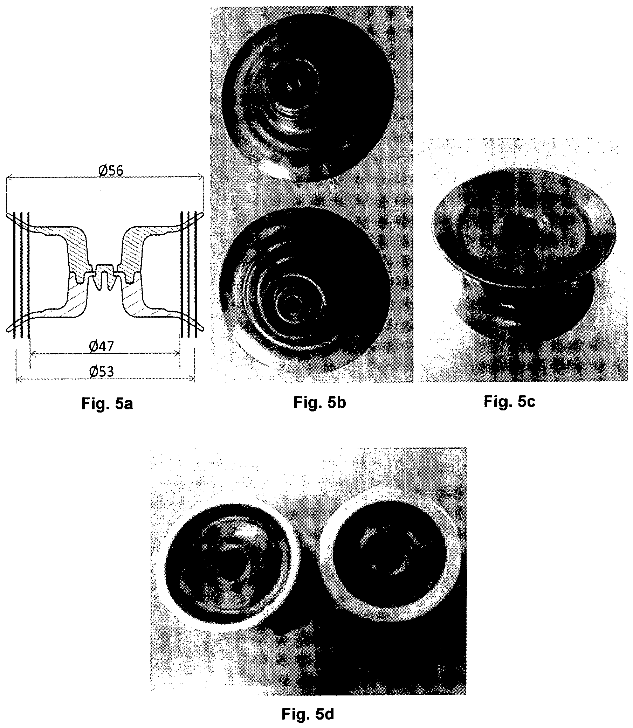

In a further experiment, circular samples having an outer diameter of 56 mm (see cross-section in Fig. 5a) and including a fixing point and a sealing lip were injection molded using the TPE material EPMT (purchased from Ruhr Compounds GmbH). Photographs of the circular samples in disconnected and connected form are shown in Figures 5b and 5c, respectively.

In order to evaluate the effect of body tolerances, the TPE samples were inserted into steel tubes (see Fig. 5d) with an inner diameter of 47 mm (resulting lip interference 1.5 mm) and 53 mm (resulting lip interference 3 mm) and connected via the fixing point. For comparison, PE foams having a thickness of 20 mm were pressed into identical steel tubes (at identical interferences). The samples were then heat-treated at 90°C for 24 h.

A visual inspection (after cooling down to room temperature) revealed that both PE samples came loose in the steel tubes due to substantial shrinkage during the thermal treatment. On the other hand, the TPE samples were still fixed inside the tubes without any perceivable physical changes.

Accordingly, it has been shown that in comparison to conventional PE foams, sealing members in accordance to the present invention are less prone to shrinkage under heat loading, enable improved mechanical fixation and hence effectively maintain their acoustic blocking and moisture barrier properties.

Once given the above disclosure, many other features, modifications, and improvements will become apparent to the skilled artisan.

### REFERENCE NUMERALS

A/B: half segments
1a/1b, 9: central portion
2a/2b: fixing point
3a/3b, 8a/8b: lip portions
4: hinge connection
5: male connector portion
6: female connector portion
7: tongue-and groove joint
10: hollow cavity portion

## Claims

1. A sealing member for sound and/or vibration damping having a uniform composition, optionally with an adhesive layer attached thereto, **characterized in that** the sealing member comprises a thermoplastic elastomer (TPE) as the main component,
wherein the thermoplastic elastomer is selected from a compound comprising an elastomeric component at a content of 60 to 98% by weight and a thermoplastic component at a content of 2 to 40% by weight based on the total weight of the thermoplastic elastomer, and
wherein the sealing member comprises one or more hollow internal cavity/cavities (10).

2. A sealing member for sound/and/or vibration damping having multiple sections, optionally with an adhesive layer attached thereto, **characterized in that** each of the multiple sections comprise a thermoplastic elastomer (TPE) as the main component and the thermoplastic elastomer (TPE) in each section may be identical or different,
wherein the thermoplastic elastomer is selected from a compound comprising an elastomeric component at a content of 60 to 98% by weight and a thermoplastic component at a content of 2 to 40% by weight based on the total weight of the thermoplastic elastomer, and
wherein the sealing member comprises one or more hollow internal cavity/cavities (10).

3. The sealing member according to claim 1 or 2, wherein the total thermoplastic elastomer content is at least 90% by weight, preferably at least 95% by weight based on the total weight of polymeric components present in the sealing member.

4. The sealing member according to any of the preceding claims, wherein the elastomeric component is a vulcanized rubber, preferably a recycled vulcanized rubber.

5. The sealing member according to any of the preceding claims, wherein the sealing member is a fender seal.

6. The sealing member according to any of the preceding claims, wherein the sealing member or the sections of the sealing member consist of the thermoplastic elastomer(s).

7. The sealing member according to any of the preceding claims, consisting of two half-segments (A, B) which are connectable through one or more fixing points (2a, 2b).

8. The sealing member according to claim 7, wherein a hollow internal cavity (10) is formed upon connection of the two half-segments (A, B).

9. The sealing member according to any of claims 7 or 8, wherein the sealing member is formed so as to comprise one or more sealing lip portions (3a, 3b, 8a, 8b) extending from the portion defining the hollow internal cavity (10).

10. The sealing member according to any of claims 7 to 9, wherein the two half-segments are connected by a hinge connection formed of the same material as the half-segments.

11. A vehicle body member having a cavity comprising the sealing member according to any of claims 1 to 10.

12. The vehicle body member according to claim 11, wherein the vehicle body member is an automotive fender.

13. Method of manufacturing a sealing member for sound and/or vibration damping comprising a step of forming the sealing member according to any of claims 1 to 10 by a molding process, preferably by injection molding.

## Patentansprüche

1. Dichtungskörper zur Schall- und/oder Vibrationsdämpfung mit einheitlicher Zusammensetzung, gegebenenfalls mit einer darauf angebrachten Klebeschicht, welcher **dadurch gekennzeichnet ist, dass** der Dichtungskörper als Hauptbestandteil ein thermoplastisches Elastomer (TPE) umfasst,
wobei das thermoplastische Elastomer aus einer Zusammensetzung ausgewählt ist, die eine Elastomerkomponente mit einem Anteil von 60 bis 98 Gew.-% und eine thermoplastische Komponente mit einem Anteil von 2 bis 40 Gew.-% bezogen auf das Gesamtgewicht des thermoplastischen Elastomers umfasst, und
wobei das Dichtungselement einen oder mehrere innere Hohlräume (10) umfasst.

2. Dichtungselement zur Schall-/und/oder Schwingungsdämpfung mit mehreren Abschnitten, gegebenenfalls mit einer darauf angebrachten Klebeschicht, **dadurch gekennzeichnet, dass** jeder der mehreren Abschnitte als Hauptkomponente ein thermoplastisches Elastomer (TPE) aufweist und die thermoplastischen Elastomere (TPE) in jedem Abschnitt identisch oder unterschiedlich sein können,
wobei das thermoplastische Elastomer aus einer Zusammensetzung ausgewählt ist, die eine Elastomerkomponente mit einem Anteil von 60 bis 98 Gew.-% und eine thermoplastische Komponente mit einem Anteil von 2 bis 40 Gew.-% bezogen auf das Gesamtgewicht des thermoplastischen Elastomers umfasst, und
wobei das Dichtungselement einen oder mehrere hohle innere Hohlräume (10) umfasst.

3. Dichtungselement nach Anspruch 1 oder 2, wobei der Gesamtgehalt an thermoplastischem Elastomer mindestens 90 Gew.-%, vorzugsweise mindestens 95 Gew.-%, bezogen auf das Gesamtgewicht der im Dichtungselement vorhandenen Polymerkomponenten, beträgt.

4. Dichtungselement nach einem der vorhergehenden Ansprüche, wobei die Elastomerkomponente ein vulkanisierter Gummi, vorzugsweise ein recycelter vulkanisierter Gummi, ist.

5. Dichtungselement nach einem der vorhergehenden Ansprüche, wobei das Dichtungselement eine Kotflügeldichtung ist.

6. Dichtungselement nach einem der vorhergehenden Ansprüche, wobei das Dichtungselement oder die Abschnitte des Dichtungselements aus dem oder den thermoplastischen Elastomeren bestehen.

7. Dichtungselement nach einem der vorhergehenden Ansprüche, bestehend aus zwei Halbsegmenten (A, B), die über einen oder mehrere Befestigungspunkte (2a, 2b) verbindbar sind.

8. Dichtungselement nach Anspruch 7, wobei beim Verbinden der beiden Halbsegmente (A, B) ein innerer Hohlraum (10) entsteht.

9. Dichtungselement nach einem der Ansprüche 7 oder 8, wobei das Dichtungselement so geformt ist, dass es einen oder mehrere Dichtungslippenabschnitte (3a, 3b, 8a, 8b) umfasst, die sich von dem Abschnitt erstrecken, der den hohlen Innenhohlraum (10) definiert.

10. Dichtungselement nach einem der Ansprüche 7 bis 9, wobei die beiden Halbsegmente durch eine Scharnierverbindung verbunden sind, die aus dem gleichen Material wie die Halbsegmente besteht.

11. Fahrzeugkarosserieelement mit einem Hohlraum, der das Dichtungselement nach einem der Ansprüche 1 bis 10 umfasst.

12. Fahrzeugkarosserieelement nach Anspruch 11, wobei das Fahrzeugkarosserieelement ein Automobilkotflügel ist.

13. Verfahren zur Herstellung eines Dichtungselements zur Schall- und/oder Vibrationsdämpfung, umfassend einen Schritt des Formens des Dichtungselements nach einem der Ansprüche 1 bis 10 durch ein Formverfahren, vorzugsweise durch Spritzgießen.

## Revendications

1. Élément d'étanchéité pour un amortissement de sons et/ou de vibrations ayant une composition uniforme, facultativement avec une couche adhésive attachée à celui-ci, **caractérisé en ce que** l'élément d'étanchéité comprend un élastomère thermoplastique (TPE) en tant que composant principal,
dans lequel l'élastomère thermoplastique est choisi parmi un composé comprenant un composant élastomère à une teneur de 60 à 98 % en poids et un composant thermoplastique à une teneur de 2 à 40 % en poids sur la base du poids total de l'élastomère thermoplastique, et
dans lequel l'élément d'étanchéité comprend une ou plusieurs cavités internes creuses (10).

2. Élément d'étanchéité pour un amortissement de sons/et/ou de vibrations ayant de multiples sections, facultativement avec une couche adhésive attachée à celui-ci, **caractérisé en ce que** chacune des multiples sections comprend un élastomère thermoplastique (TPE) en tant que composant principal et l'élastomère thermoplastique (TPE) dans chaque section peut être identique ou différent,
dans lequel l'élastomère thermoplastique est choisi parmi un composé comprenant un composant élastomère à une teneur de 60 à 98 % en poids et un composant thermoplastique à une teneur de 2 à 40 % en poids sur la base du poids total de l'élastomère thermoplastique, et
dans lequel l'élément d'étanchéité comprend une ou plusieurs cavités internes creuses (10).

3. Élément d'étanchéité selon la revendication 1 ou 2, dans lequel la teneur de l'élastomère thermoplastique totale est d'au moins 90 % en poids, de préférence d'au moins 95 % en poids sur la base du poids total des composants polymères présents dans l'élément d'étanchéité.

4. Élément d'étanchéité selon l'une quelconque des revendications précédentes, dans lequel le composant élastomère est un caoutchouc vulcanisé, de préférence un caoutchouc vulcanisé recyclé.

5. Élément d'étanchéité selon l'une quelconque des revendications précédentes, dans lequel l'élément d'étanchéité est un joint de pare-chocs.

6. Élément d'étanchéité selon l'une quelconque des revendications précédentes, dans lequel l'élément d'étanchéité ou les sections de l'élément d'étanchéité sont constitués du ou des élastomères thermoplastiques.

7. Élément d'étanchéité selon l'une quelconque des revendications précédentes, constitué de deux demi-segments (A, B) pouvant être reliés par un ou plusieurs points de fixation (2a, 2b).

8. Élément d'étanchéité selon la revendication 7, dans lequel une cavité interne creuse (10) est formée lors de la connexion des deux demi-segments (A, B).

9. Élément d'étanchéité selon l'une quelconque des revendications 7 ou 8, dans lequel l'élément d'étanchéité est formé de manière à comprendre une ou plusieurs parties de lèvre d'étanchéité (3a, 3b, 8a, 8b) s'étendant depuis la partie définissant la cavité interne creuse (10).

10. Élément d'étanchéité selon l'une quelconque des revendications 7 à 9, dans lequel les deux demi-segments sont reliés par une liaison charnière formée du même matériau que les demi-segments.

11. Élément de carrosserie de véhicule ayant une cavité comprenant l'élément d'étanchéité selon l'une quelconque des revendications 1 à 10.

12. Élément de carrosserie de véhicule selon la revendication 11, dans lequel l'élément de carrosserie de véhicule est un pare-chocs d'automobile.

13. Procédé de fabrication d'un élément d'étanchéité pour un amortissement de sons et/ou de vibrations comprenant une étape de formation de l'élément d'étanchéité selon l'une quelconque des revendications 1 à 10 par un procédé de moulage, de préférence par moulage par injection.
